# EUROPEAN PATENT SPECIFICATION

(11) **EP 1 895 724 B1**
(45) Date of publication and mention of the grant of the patent: **28.07.2010**
(21) Application number: 06752975.0
(22) Date of filing: 16.06.2006
(51) Int. Cl.: H04L 12/66, H04L 12/56, H04L 29/06

(54) **A METHOD FOR IMPLEMENTING ACTIVE/STANDBY GATEWAY DEVICE IN THE NETWORK AND A SYSTEM THEREOF**
VERFAHREN ZUR IMPLEMENTIERUNG EINER AKTIV/STANDBY-GATEWAY-EINRICHTUNG IM NETZWERK UND SYSTEM DAFÜR
PROCÉDÉ POUR IMPLÉMENTER UN DISPOSITIF DE PASSERELLE EN ACTIVITÉ/EN VEILLE DANS LE RÉSEAU ET SYSTÈME POUR CELA

(30) Priority: 23.06.2005 CN 200510077395
(43) Date of publication of application: 05.03.2008
(73) Proprietor: Huawei Technologies Co., Ltd., Longgang District, Shenzhen Guangdong 518129 (CN)
(72) Inventor: LEI, Wenyang Huawei Administration Building, Shenzhen Guangdong Province 518129 (CN)
(74) Representative: Thun, Clemens
(86) International application number: PCT/CN2006/001363
(87) International publication number: WO 2006/136088

(56) References cited:
- WO-A-2004/028102
- WO-A1-2004/028102
- CN-A- 1 531 262
- US-A- 6 148 410
- US-A1- 2003 088 698
- "Virtual Router Redundancy Protocol (VRRP) White Paper" WHITE PAPER NORTEL NETWORKS, XX, XX, 1 January 2000 (2000-01-01), pages 1-12, XP002253293

## Description

### Field of the Invention

The invention relates to the field of network communications, and in particular, to a method and device for implementing active and standby gateway devices in a network.

### Background of the Invention

With the development of Internet technologies, a large number of hosts (a host may be a computer, or any other device) are required to connect to Internet, to be served by other hosts or to provide services to other hosts.

A gateway device is necessary for connecting a host to Internet. A fault appearing in the Gateway device may result in a communication interrupt between the host and Internet. In such a situation, the host can not be served by other devices over Internet, and is incapable of providing services to other devices over Internet.

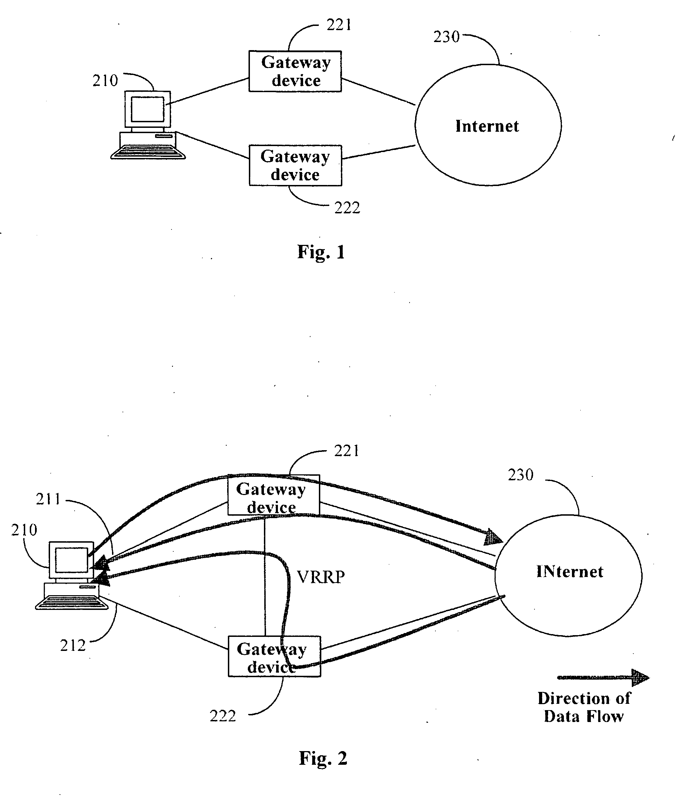

Some important hosts each are required to connect to two or more gateway devices at the same time, so as to prevent the communication interrupt between the hosts and Internet due to faults in the gateway devices. As shown in Figure 1, a gateway device 221 is used as an active gateway to provide connection service to a host 210, and a gateway device 222 is used as a standby gateway. When a fault occurs in the active gateway, the standby gateway takes over to provide services to the host 210. In this way, the communication interrupt between the host 210 and Internet 230 due to a fault in a gateway device may be avoided efficiently.

Generally, Virtual Router Redundancy Protocol (VRRP) is utilized to implement a redundancy backup between a host and two gateways. Figure 2 illustrates a particular method, which is as follows:

Two interfaces 211 and 212 are provided in the host 210 for connections to two gateway devices 221 and 222. The interface 211 is an active interface and the interface 212 is a standby interface. In normal conditions, only one interface 211 (active interface) is capable of the reception and transmission of data packets, while the other interface 212(standby interface) which is in standby status can not receive and transmit data packets. When one interface has a fault, the other interface is activated.

In a VRRP-based solution, VRRP runs over the two gateway devices, a virtual Internet Protocol (IP) address is provided. The address of the gateway devices known by the host 210 is a virtual IP address. As shown in Figure 2, the common virtual IP address of the gateway devices 221 and 222 is 10.100.10.1. Each of the two gateways has a physical IP address. In Figure 2, the physical IP address of the gateway device 221 is 10.100.10.2, and the physical IP address of the gateway device 222 is 10.100.10.3. The virtual IP address is a service address of the gateway device.

During startup, information is exchanged between the two gateway devices 221 and 222, to determine which is the active or standby gateway. In normal operation, timed status synchronization is required between the two gateway devices 221 and 222. The standby gateway determines whether the active gateway is working normally according to synchronization information. If the standby gateway does not receive synchronization messages from the active gateway, the standby gateway determines that the active gateway has a fault and takes over, i.e. the standby gateway becomes the active gateway.

In the above solution, faults of the active and standby gateways are detected in accordance with a heartbeat protocol of VRRP. The time period of the heartbeat protocol is 1 second. Usually a fault can not be determined before the detection has been performed three times. Therefore, it takes a relatively long time, i.e. usually more than 3 seconds, to detect a fault.

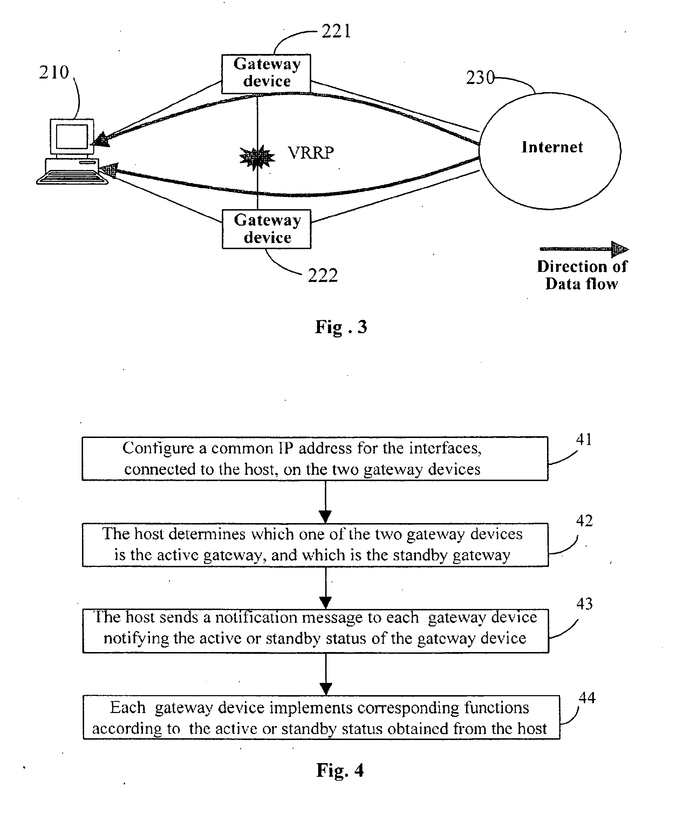

Furthermore, VRRP does not allow the two gateway devices 221 and 222 to be in active status at the same time. The situation that the two gateway devices serve as active gateways at the same time may result in uncontrollable errors. As shown in Figure 3, for example, if the connection between the active and standby gateways is interrupted while no fault occurs in both of the two gateway devices 221 and 222, each of the gateway devices 221 and 222 enters active status, and publishes a route associated with the host 210 onto Internet 230. In this way, a packet destined for the host 210 from a router on Internet may be sent to the gateway devices 221, or may be sent to the gateway devices 222. However, because only one of the two interfaces in the host 210 is the active interface connected to the gateway while the other interface can not receive and transmit packets, the gateway device connected to the other interface can not send received packets from Internet to the host 210. As a result, the host can not be served by Internet normally. In WO 2004/028102 A1 is disclosed a method and apparatus for providing improved failover notification to redundancy group members when the primary member ceases to function, allowing failover to another group member and, thus, allowing continued virtual router service.

### Summary of the Invention

The invention provides a method and device for implementing active and standby gateway devices in a network, to avoid an error switchover between the active and standby gateways, and improve the switchover speed efficiently.

A method for implementing active and standby gateway devices in a network includes:
determining, by a host connected to at least two gateway devices, an active status to which one of the at least two gateway devices is to be set and a standby status to which the other of the at least two gateway devices is to be set; notifying, by the host, each of the at least two gateway devices of information of the determined active or standby status, to implement corresponding processing functions by each of the at least two gateway devices according to the information of the determined active or standby status sent from the host.

The process of determining by the host the active status to which one of the at least two gateway devices is to be set and the standby status to which the other of the at least two gateway devices is to be set may include:
when the at least two gateway devices are normal, choosing, by the host, one of the at least two gateway devices as the active gateway device, and the other of the at least two gateway devices as the standby gateway device;
when one gateway device of the at least two gateway devices has a fault, configuring the one gateway device to be a standby device, and determining a new active gateway device.

The process of notifying by the host each of the at least two gateway devices of information of determined active or standby status may include:
transmitting, by the host, information of active or standby status to each of the at least two gateway devices, respectively.

The process of notifying by the host each of the at least two gateway devices of information of determined active or standby status may include:
transmitting, by the host, a notification message via each of interfaces connected to the at least two gateway devices, to notify active or standby status of each of the interfaces.

The notification message may be transmitted over a link layer protocol or a protocol above Internet Protocol layer.

The method for implementing active and standby gateway devices in the network may further include:
configuring a common Internet Protocol address for interfaces, connected to the host, on the at least two gateway devices.

The method for implementing active and standby gateway devices in the network may further include:
publishing, by the active gateway device, route information of a high priority in the network, and publishing, by the standby gateway device, route information of a low priority in the network;
   or
publishing, by only the active gateway device, route information in the network.

The method for implementing active and standby gateway devices in the network may further include:
when the standby gateway device receives a packet destined for the host sent from the network, transmitting, by the standby gateway device, the packet to the active gateway device, sending, by the active gateway device, the packet to the host.

According to another aspect of the invention, an apparatus for processing status of a gateway device is provided. The apparatus is configured in a host, and includes:
a status determination unit, adapted for determining an active status to which one of at least two gateway devices connected to the device is to be set and a standby status to which the other of the at least two gateway devices is to be set; and a status notification unit, adapted for notifying each of the at least two gateway devices of the determined active or standby status.

The apparatus may further include an interface detection unit, adapted for detecting a working status of the interface via which the host is connected to the at least two gateway devices, and providing a result of the detection to the status determination unit.

The apparatus may further include a packet construction unit, adapted for constructing a notification message required by the status notification unit to notify the active or standby status.

According to a further aspect of the invention, a gateway device is provided. The gateway device includes:
a status notification receiving unit, adapted for receiving active or standby status information from a host; and a status adjustment unit, adapted for setting the gateway device into a status corresponding to the active or standby status information.

As can be seen, in the above technical solutions, the switchover speed between active and standby gateway devices is relatively fast. In other words, the switchover in the invention is faster than that in the prior art. The switchover time required may be reduced to 50 milliseconds, compared with the 3 seconds required in the prior art.

Furthermore, the switchover speed between active and standby gateway devices is controlled by a host in the invention, without any need of running heartbeat protocol between the active and standby gateway devices, and thereby the possibility that two gateway devices become active gateways at the same time may be avoided. As a result, an error switchover between the active and standby gateway devices may be avoided, and thereby the switchover may be not only faster, but also more accurate and reliable.

### Brief Description of the Drawings

Figure is a diagram illustrating the structure of a network including an active gateway and a standby gateway in the prior art;

Figure 2 is a diagram illustrating a switchover process between an active gateway and a standby gateway in the prior art;

Figure 3 is a diagram illustrating an error switchover process between an active gateway and a standby gateway in the prior art;

Figure 4 is a flow chart illustrating a method according to the invention;

Figure 5 is a diagram illustrating a switchover process between an active gateway and a standby gateway according to the invention;

Figure 6 is a diagram illustrating a switchover process when a interface fault occurs between an active gateway and a standby gateway according to the invention.

### Detailed Description of the Embodiments

In the invention, a host determines whether two gateway devices connected to the host should be in an active or standby status, and notifies the gateway devices of information of the determined active or standby status of the gateway devices. Each of the two gateway devices determines its own status, i.e. the active or standby status, according to the information notified by the host, and processes accordingly. With the invention, the two gateway devices may switch between the active and standby status without the need of running any heartbeat protocol between the two gateway devices.

Furthermore, in the invention, a corresponding route priority may be configured for each of the active and standby gateway devices, and route information with the priority information may be propagated. In this way, the active or standby gateway device may be chosen according to the route priorities in the communication network, so as to implement switchover between the active and standby gateway devices.

Particularly, a notification message notifying the active or standby status of interfaces is transmitted between a host and gateway devices. Each of the gateway devices determines the active or standby status of interfaces according to the notification message from the host, to determine the route priorities of interfaces connected to the host. The route priority of a standby interface is lower than priorities of other routes. When publishing a route of an interface connected to the host, the gateway device determines the priority of the route according to the status of the interface. If the status of the interface is active, the route to be published has a higher priority. If the status of the interface is standby, the route to be published has a lower priority. As a result, a proper active gateway device may be chosen for a packet destined for the host from a router on Internet.

A method according to the invention is described in detail below in conjunction with the drawings.

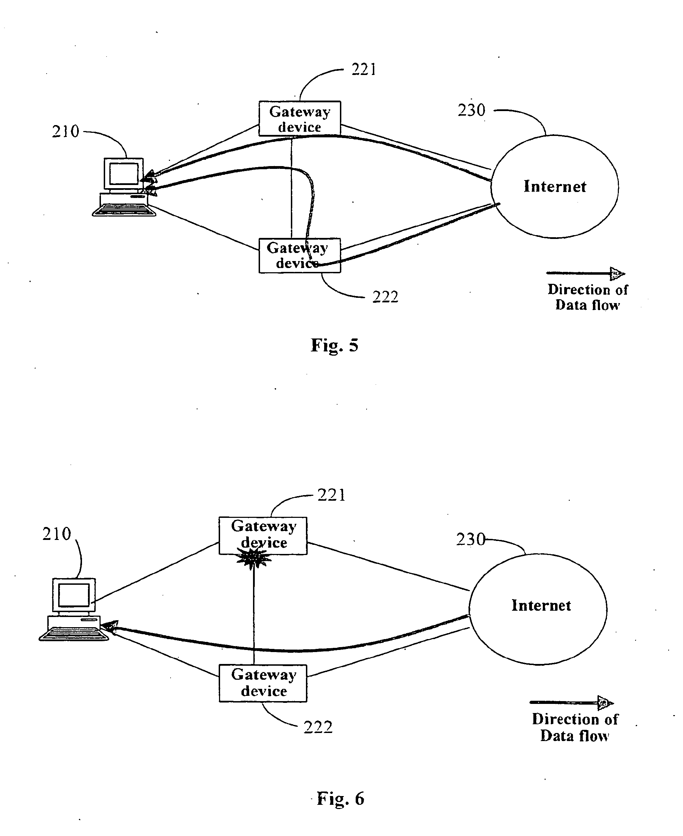

Figures 4 and 5 illustrate a process for implementing the method according to the invention, which is as follows:

In block 41, interfaces, connected to a host, on two gateway devices are configured with a common IP address.

As shown in Figure 5, the interfaces, connected to the host, on a gateway device 221 and a gateway device 222 have a common IP address, i.e. 10.100.10.1.

In block 42, the host chooses one gateway device as an active gateway, and the other gateway device as a standby gateway. In other words, the host chooses one interface of two interfaces, connected to the gateway devices, on the host as an active interface, and the other interface as a standby interface.

When both the two gateway devices are normal, the host chooses any one of the two gateway devices as the active gateway. When one of the two gateway devices has a fault, the host chooses the other one of the two gateway devices as the active gateway.

In block 43, the host sends a notification message via interfaces connected to the gateway devices, notifying whether the interfaces are active interface or standby interface.

For example, when discovering that the active interface has a fault, the host sends a notification message notifying the gateway device connected to the standby interface, and changes the status of the standby interface so that the standby interface becomes the active, to assure, thereby, that one, and only one, interface serves as an active interface at a time.

The notification message may be directly encapsulated over a link layer protocol, or may be carried over IP layer, and should not be limited to a particular form.

The format of the active/standby interface information carried in the notification message may be a field having one and only one bit. The value 1 of the bit indicates that the interface is an active interface, and the value 0 f the bit represents that the interface is a standby interface, and vice versa.

The interface information may be in other formats.

In block 44, the gateway devices receive the notification messages sent from the host, and determine whether the interfaces, via which the gateway devices are connected to the host, are an active interface or a standby interface, to implement corresponding functions, i.e. the functions to be implemented by each of the active and standby gateway devices.

When the active or standby status of each of the gateway devices is determined, the gateway devices adopt different route publishing policies and message forwarding policies according to their status.

(1) Route publishing policy

In addition, when the two gateway devices are determined to be an active or standby gateway, each of the two gateway devices publishes a route of an interface connected to the host according to its active or standby status. If the interface is an active interface, the priority of the published route is relatively higher; otherwise, the priority of the published route is relatively lower. Of course, the standby gateway device may not publish a route of an interface connected to the host.

Packets destined for the host sent from a router on Internet is transmitted preferentially by the active gateway device connected to the active interface, because the route priority of the active gateway device is higher.

(2) Message forwarding policy

The active gateway device is adapted to directly send a message, from the network, to the host. When receiving a message destined for the host from the network, the standby gateway device forwards the message to the active gateway device, and the active gateway device transmits the message to the host.

As shown in Figure 5, one gateway device, i.e. any one of two gateway devices 221 and 222, is connected to the host via two routes. One of the two routes is a direct route, i.e., a route directly connected to the host, the egress of which is an interface connected to the host. The other of the two routes is an indirect route via which the one gateway device is connected to the other gateway device. The egress of the indirect route is an interface connected to the other gateway device. The one gateway device may also be connected to the other gateway device via other routers.

Usually, a router (a gateway device is also a router) considers the priority of a direct route to be higher than that of an indirect route. In addition, in the invention, the route of an interface has a lower priority than other routes if the interface is a standby interface. Therefore, normally a packet destined for the host is sent from the network directly to the active gateway device, which forwards the packet to the host. However, when a path between the network and the active gateway device has a fault, the network may send a packet destined for the host to the standby gateway device. When receiving the packet destined for the host from, for example, Internet, the standby gateway device forwards the packet to the other gateway device, i.e. the active gateway device, and the active gateway device forwards the packet to the host.

A process after a fault occurs in an active gateway device is described below in conjunction with the drawings.

As shown in Figure 5, currently the gateway device 221 is in active status. Once the gateway device 221 has a fault, the host 210 notifies the gateway device 222 to change the status of an interface, connected to the host 210, on the gateway device 222 into active status. In addition, the host 210 configures an interface connected to the gateway device 221 to be in standby status. Upon recovery from the fault, the gateway device 221 will know from the host 210 that its interface connected to the host 210 is currently in standby status.

Figure 6 shows the data flow after the switchover between the active and standby gateways. The data destined for the host sent from the network are transmitted to the host 210 directly via the current active gateway device, i.e., the gateway device 222.

In the invention, the switchover speed between active and standby gateway devices depends on the time for detecting an interface fault between a host and a gateway device. Usually it takes different time for detecting different interfaces. For some interfaces, the interface fault detection time may be within 50 milliseconds. In general, the interface fault detection time is shorter than the time taken by heartbeat protocol to detect a gateway fault. Therefore, a switchover between active and standby gateway devices may be completed within 50 milliseconds at the soonest in the invention, which is much speedier than that in VRRP.

In summary, the time for switchover between an active gateway device and a standby gateway device may be reduced to 50 milliseconds in the invention, compared with the 3 seconds in the prior art. Furthermore, switchover between active and standby gateway devices is controlled by a host, without any need of running heartbeat protocol between the two gateway devices. As a result, the two gateway devices are impossible to become active gateways at the same time. In this way, the switchover protection of the gateway devices may be more accurate and reliable.

An apparatus for processing status of a gateway device according to the invention is configured in a host. The apparatus includes:

a status determination unit, adapted to determine active or standby status of an interface via which the host is connected to the gateway device;

a status notification unit, adapted to notify the gateway device, connected to the host, of the determined active or standby status of the interface.

Optionally, the apparatus may further include an interface detection unit, adapted to detect working status of the interface via which the host is connected to the gateway device, and provide a result of the detection to the status determination unit.

Optionally, the apparatus may further include a packet construction unit, adapted to construct a notification message required by the status notification unit to notify the active or standby status of the interface.

A gateway device according to the invention includes:

a status notification receiving unit, adapted to receive active or standby status information of an interface from a host;

a status adjustment unit, adapted to set the gateway device into status corresponding to the active or standby status information of the interface.

Though some preferred embodiments of the invention have been described above, the protection scope of the invention is not intended to be limited to these. Any modifications and substitutions readily recognized by those skilled in the art within the scope of the invention shall be covered within the protection scope of the invention, which shall be defined by the following claims.

## Claims

1. A method for implementing active and standby gateway devices (221, 222) in a network, **characterized by** comprising:
determining (42), by a device (210) connected to at least two gateway devices, an active status to which one of the at least two gateway devices is to be set and a standby status to which the other of the at least two gateway devices are to be set;
notifying (43), by the device, each of the at least two gateway devices of information of the determined active or standby status, to implement (44) corresponding processing functions by each of the at least two gateway devices according to the information of the determined active or standby status sent from the device.

2. The method according to claim 1, wherein determining by the device the active status to which one of the at least two gateway devices is to be set and the standby status to which the other of the at least two gateway devices is to be set comprises:
when the at least two gateway devices are normal, choosing, by the device, one of the at least two gateway devices as the active gateway device, and the other of the at least two gateway devices as the standby gateway device.

3. The method according to claim 1, wherein notifying by the device each of the at least two gateway devices of information of determined active or standby status comprises:
transmitting, by the device, information of active or standby status to each of the at least two gateway devices, respectively.

4. The method according to claim 1 or 2 or 3, wherein notifying by the device each of the at least two gateway devices of information of determined active or standby status comprises:
transmitting, by the device, a notification message via each of interfaces connected to the at least two gateway devices, to notify active or standby status of each of the interfaces.

5. The method according to claim 4, wherein the notification message is transmitted over a link layer protocol or a protocol over an Internet Protocol layer.

6. The method according to claim 4, further comprising:
configuring a common Internet Protocol address for interfaces, connected to the device, on the at least two gateway devices.

7. The method according to claim 4, further comprising:
publishing, by the active gateway device, route information of a high priority in the network, and publishing, by the standby gateway device, route information of a low priority in the network;
or
publishing, by the active gateway device, route information in the network.

8. The method according to claim 1, further comprising:
when one of the at least two gateway devices determines itself to be the standby gateway device and receives a packet destined for the device sent from the network, transmitting, by the standby gateway device, the packet to the active gateway device, sending, by the active gateway device, the packet to the device.

9. An apparatus for processing status of a gateway device, configured in a device, **characterized by** comprising:
a status determination unit, adapted for determining an active status to which one of at least two gateway devices connected to the device is to be set and a standby status to which the other of the at least two gateway devices is to be set; and
a status notification unit, adapted for notifying each of the at least two gateway devices of the determined active or standby status.

10. The apparatus according to claim 9, wherein the active status and the standby status are determined from the working statuses of interfaces via which the device is connected to the at least two gateway devices.

11. The apparatus according to claim 10, further comprising an interface detection unit, adapted for detecting the working statuses of the interfaces via which the device is connected to the at least two gateway devices, and providing a result of the detection to the status determination unit.

12. The apparatus according to claim 10, further comprising a packet construction unit, adapted for constructing a notification message required by the status notification unit to notify the active or standby status.

13. The method according to claim 2, wherein determining by the device status to which the at least two gateway devices are to be set further comprises:
when the active gateway device has a fault, configuring the active gateway device to be a standby gateway device, and determining a new active gateway device.

## Patentansprüche

1. Verfahren zum Implementieren von Aktiv- und Standby-Gateway-Einrichtungen (221, 222) in einem Netzwerk, **gekennzeichnet durch** die folgenden Schritte:
eine mit mindestens zwei Gateway-Einrichtungen verbundene Einrichtung (210) bestimmt (42) einen Aktiv-Status, auf den eine der mindestens zwei Gateway-Einrichtungen zu setzen ist, und einen Standby-Status, auf den die andere der mindestens zwei Gateway-Einrichtungen zu setzen ist;
die Einrichtung benachrichtigt (43) jede der mindestens zwei Gateway-Einrichtungen über Informationen des bestimmten Aktiv- oder Standby-Status, um entsprechende Verarbeitungsfunktionen **durch** jede der mindestens zwei Gateway-Einrichtungen gemäß den von der Einrichtung gesendeten Informationen des bestimmten Aktiv- oder Standby-Status zu implementieren (44).

2. Verfahren nach Anspruch 1, wobei das Bestimmen des Aktiv-Status, auf den eine der mindestens zwei Gateway-Einrichtungen zu setzen ist, und des Standby-Status, auf den die andere der mindestens zwei Gateway-Einrichtungen zu setzen ist, durch die Einrichtung Folgendes umfasst:
wenn die mindestens zwei Gateway-Einrichtungen normal sind, wählt die Einrichtung eine der mindestens zwei Gateway-Einrichtungen als die Aktiv-Gateway-Einrichtung und die andere der mindestens zwei Gateway-Einrichtungen als die Standby-Gateway-Einrichtung.

3. Verfahren nach Anspruch 1, wobei das Benachrichtigen jeder der mindestens zwei Gateway-Einrichtungen über Informationen des bestimmten Aktiv- oder Standby-Status durch die Einrichtung Folgendes umfasst:
die Einrichtung sendet Informationen des Aktiv- oder Standby-Status jeweils zu jeder der mindestens zwei Gateway-Einrichtungen.

4. Verfahren nach Anspruch 1 oder 2 oder 3, wobei das Benachrichtigen jeder der mindestens zwei Gateway-Einrichtungen über Informationen des bestimmten Aktiv- oder Standby-Status durch die Einrichtung Folgendes umfasst:
die Einrichtung sendet eine Benachrichtigungsnachricht über jede von mit den mindestens zwei Gateway-Einrichtungen verbundenen Schnittstellen, um den Aktiv- oder Standby-Status jeder der Schnittstellen anzukündigen.

5. Verfahren nach Anspruch 4, wobei die Benachrichtigungsnachricht über ein Streckenschichtprotokoll oder ein Protokoll über eine Internet-Protokoll-Schicht gesendet wird.

6. Verfahren nach Anspruch 4, ferner mit dem folgenden Schritt:
Konfigurieren einer gemeinsamen Internet-Protokoll-Adresse für Schnittstellen, die mit der Einrichtung verbunden sind, auf den mindestens zwei Gateway-Einrichtungen.

7. Verfahren nach Anspruch 4, ferner mit den folgenden Schritten:
die Aktiv-Gateway-Einrichtung publiziert Routeninformationen einer hohen Priorität in dem Netzwerk und die Standby-Gateway-Einrichtung publiziert Routeninformationen einer niedrigen Priorität in dem Netzwerk; oder
die Aktiv-Gateway-Einrichtung publiziert Routeninformationen in dem Netzwerk.

8. Verfahren nach Anspruch 1, ferner mit den folgenden Schritten:
wenn eine der mindestens zwei Gateway-Einrichtungen sich selbst als die Standby-Gateway-Einrichtung bestimmt und ein von dem Netzwerk gesendetes, für die Einrichtung bestimmtes Paket empfängt, sendet die Standby-Gateway-Einrichtung das Paket zu der Aktiv-Gateway-Einrichtung und die Aktiv-Gateway-Einrichtung sendet das Paket zu der Einrichtung.

9. Vorrichtung zum Verarbeiten des Status einer Gateway-Einrichtung, die in einer Einrichtung konfiguriert ist, **dadurch gekennzeichnet, dass** sie Folgendes umfasst:
eine Statusbestimmungseinheit, die dafür ausgelegt ist, einen Aktiv-Status, auf den eine von mindestens zwei mit der Einrichtung verbundenen Gateway-Einrichtungen zu setzen ist, und einen Standby-Status, auf den die andere der mindestens zwei Gateway-Einrichtungen zu setzen ist, zu bestimmen; und
eine Statusbenachrichtigungseinheit, die dafür ausgelegt ist, jede der mindestens zwei Gateway-Einrichtungen über den bestimmten Aktiv- oder Standby-Status zu benachrichtigen.

10. Vorrichtung nach Anspruch 9, wobei der Aktiv-Status und der Standby-Status aus den Arbeitsstatussen von Schnittstellen bestimmt wird, über die die Einrichtung mit den mindestens zwei Gateway-Einrichtungen verbunden ist.

11. Vorrichtung nach Anspruch 10, die ferner eine Schnittstellendetektionseinheit umfasst, die dafür ausgelegt ist, die Arbeitsstatusse der Schnittstellen zu detektieren, über die die Einrichtung mit den mindestens zwei Gateway-Einrichtungen verbunden ist, und der Statusbestimmungseinheit ein Ergebnis der Detektion bereitzustellen.

12. Vorrichtung nach Anspruch 10, die ferner eine Paketkonstruktionseinheit umfasst, die dafür ausgelegt ist, eine Benachrichtigungsnachricht zu konstruieren, die von der Statusbenachrichtigungseinheit benötigt wird, um den Aktiv- oder Standby-Status anzukündigen.

13. Verfahren nach Anspruch 2, wobei das Bestimmen des Status, auf den die mindestens zwei Gateway-Einrichtungen zu setzen sind, durch die Einrichtung ferner Folgendes umfasst:
wenn die Aktiv-Gateway-Einrichtung einen Fehler aufweist, Konfigurieren der Aktiv-Gateway-Einrichtung als eine Standby-Gateway-Einrichtung und Bestimmen einer neuen Aktiv-Gateway-Einrichtung.

## Revendications

1. Procédé de mise en oeuvre de dispositifs passerelle actif et de veille (221, 222) dans un réseau, **caractérisé en ce qu'**il comprend :
la détermination (42) par un dispositif (210) connecté à au moins deux dispositifs passerelle, d'un état actif sur lequel l'un des au moins deux dispositifs passerelle doit être réglé et d'un état de veille sur lequel l'autre des au moins deux dispositifs passerelle doit être réglé ;
la notification (43), par le dispositif, à chacun des au moins deux dispositifs passerelle d'informations de l'état actif ou de veille déterminé, afin de mettre en oeuvre (44) des fonctions de traitement correspondantes par chacun des au moins deux dispositifs passerelle en fonction des informations de l'état actif ou de veille déterminé envoyées par le dispositif.

2. Procédé selon la revendication 1, dans lequel la détermination par le dispositif de l'état actif sur lequel l'un des au moins deux dispositifs passerelle doit être réglé et de l'état de veille sur lequel l'autre des au moins deux dispositifs passerelle doit être réglé comprend :
quand les au moins deux dispositifs passerelle sont normaux, le choix, par le dispositif, de l'un des au moins deux dispositifs passerelle comme dispositif passerelle actif, et de l'autre des au moins deux dispositifs passerelle comme dispositif passerelle de veille.

3. Procédé selon la revendication 1, dans lequel la notification par le dispositif à chacun des au moins deux dispositifs passerelle d'informations de l'état actif ou de veille déterminé comprend :
la transmission, par le dispositif, d'informations d'état actif ou de veille à chacun des au moins deux dispositifs passerelle, respectivement.

4. Procédé selon la revendication 1 ou 2 ou 3, dans lequel la notification par le dispositif à chacun des au moins deux dispositifs passerelle d'informations de l'état actif ou de veille déterminé comprend :
la transmission, par le dispositif, d'un message de notification par l'intermédiaire de chacune des interfaces connectées aux au moins deux dispositifs passerelle, pour notifier l'état actif ou de veille de chacune des interfaces.

5. Procédé selon la revendication 4, dans lequel le message de notification est transmis selon un protocole de couche liaison ou un protocole sur une Couche de Protocole Internet.

6. Procédé selon la revendication 4, comprenant en outre :
la configuration d'une adresse de Protocole Internet commune des interfaces, connectées au dispositif, sur les au moins deux dispositifs passerelle.

7. Procédé selon la revendication 4, comprenant en outre :
la publication, par le dispositif passerelle actif, d'informations de route de haute priorité dans le réseau, et la publication, par le dispositif passerelle de veille, d'informations de route de basse priorité dans le réseau ;
ou
la publication, par le dispositif passerelle actif, d'informations de route dans le réseau.

8. Procédé selon la revendication 1, comprenant en outre :
quand l'un des au moins deux dispositifs passerelle détermine qu'il est le dispositif passerelle de veille et reçoit un paquet destiné au dispositif envoyé par le réseau, la transmission, par le dispositif passerelle de veille, du paquet au dispositif passerelle actif, et l'envoi, par le dispositif passerelle actif du paquet au dispositif.

9. Appareil de traitement de l'état d'un dispositif passerelle, configuré dans un dispositif, **caractérisé en ce qu'**il comprend :
un module de détermination d'état, adapté pour déterminer un état actif sur lequel l'un des au moins deux dispositifs passerelle connectés au dispositif doit être réglé et un état de veille sur lequel l'autre des au moins deux dispositifs passerelle doit être réglé ; et
un module de notification d'état, adapté pour notifier à chacun des au moins deux dispositifs passerelle l'état actif ou de veille déterminé.

10. Appareil selon la revendication 9, dans lequel l'état actif et l'état de veille sont déterminés à partir des états de travail des interfaces par l'intermédiaire desquelles le dispositif est connecté aux au moins deux dispositifs passerelle.

11. Appareil selon la revendication 10, comprenant en outre un module de détection d'interface, adapté pour détecter les états de travail des interfaces par l'intermédiaire desquelles le dispositif est connecté aux au moins deux dispositifs passerelle, et pour fournir un résultat de la détection au module de détermination d'état.

12. Appareil selon la revendication 10, comprenant en outre un module de construction de paquets, adapté pour construire un message de notification requis par le module de notification d'état pour notifier l'état actif ou de veille.

13. Procédé selon la revendication 2, dans lequel la détermination par le dispositif de l'état sur lequel les au moins deux dispositifs passerelle doivent être réglés comprend en outre :
quand le dispositif passerelle actif présente une défaillance, la configuration du dispositif passerelle actif en dispositif passerelle de veille, et la détermination d'un nouveau dispositif passerelle actif.
